# EUROPÄISCHE PATENTANMELDUNG

(11) **EP 0 962 127 A1**
(43) Veröffentlichungstag der Anmeldung: **08.12.1999**
(21) Anmeldenummer: 99201753.3
(22) Anmeldetag: 02.06.1999
(51) Int. Cl.: A01C 3/00, A01C 23/04

(54) **Vorrichtung zum Bearbeiten von Treibmist**

(30) Priorität: 04.06.1998 NL 1009315
(71) Anmelder: Van Mullekom, Antonius Hermanus Petrus Gerardus, 6581 GS Malden (NL)
(72) Erfinder: Van Mullekom, Antonius Hermanus Petrus Gerardus, 6581 GS Malden (NL)
(74) Vertreter: Ottevangers, Sietse Ulbe

(57) **Zusammenfassung**

Eine Vorrichtung zum Bearbeiten von Treibmist ist mit einem Gehäuse mit einem Einlaß und einem Auslaß zum Zuführen bzw. Abführen von Treibmist, einem Einlaß für Wasser und einem Einlaß für Luft sowie einem angetriebenen Zerkleinerungswerkzeug versehen, an dem der mit Wasser verdünnte Treibmist zusammen mit der zugeführten Luft entlanggeführt werden kann, um den Treibmist in einen Zustand zu bringen, in dem dieser leichter von dem Land, über das der Treibmist verteilt wird, aufgenommen werden kann.

## Beschreibung

Die vorliegende Erfindung bezieht sich auf eine Vorrichtung zum Bearbeiten von Treibmist.

Normalerweise wird Treibmist aus einer Senkgrube in einen Mistwagen aufgesaugt und danach über das Land ausgebracht. Aus umwelttechnischen Erwägungen, insbesondere wegen eines unerwünscht großen Ammoniakausstoßes, ist das Ausstreuen von Mist über das Land einschränkenden Maßnahmen unterworfen; denn beim Ausbringen von Mist bleibt dieser, je nach den Wetterverhältnissen, ziemlich oft zu lange auf dem Land liegen. Aus diesem Grunde werden momentan häufig Sodenmister oder Misteinspritzmaschinen verwendet, wobei der Mist direkt in den Boden eingebracht wird. Derartige Maschinen sind jedoch verhältnismäßig teuer, während namentlich bei Sodenmistern der Mist doch noch zu lange auf dem Land liegen bleibt.

Die Erfindung bezweckt, den Mist derart zu bearbeiten, daß dieser, ohne daß die genannten Nachteile sich in ernstem Maße ergeben, leicht und schnell vom Boden aufgenommen werden kann, während dabei auch der Ammoniakausstoß weiter verringert wird. Wenn der Mist schneller vom Boden aufgenommen werden kann, kommt dies auch dem Wachstum des Gewächses schneller zugute.

Nach der Erfindung ist die Vorrichtung zum Bearbeiten von Treibmist dazu dadurch gekennzeichnet, daß diese mit einem Gehäuse mit einem Einlaß und einem Auslaß zum Zuführen bzw. Abführen von Treibmist, einem Einlaß für Wasser und einem Einlaß für Luft sowie einem angetriebenen Zerkleinerungswerkzeug versehen ist, an dem der mit Wasser verdünnte Treibmist zusammen mit der zugeführten Luft entlanggeführt wird. Dabei genügt es oft, wenn dem aufgesaugten Treibmist im Gehäuse 30 bis 70 Gew.% Wasser zugesetzt wird; hierfür kann Grundwasser verwendet werden.

Durch diese Maßnahmen wird, wie sich zeigt, der Treibmist in einen Zustand gebracht, in dem dieser leicht von dem Land, über das der Treibmist verteilt wird, und damit vom Gewächs aufgenommen werden kann. Der Mist wird verhältnismäßig fein verteilt und zusammen mit der zugeführten Luft in starken Maße mit Wasser verdünnt, und zwar derart, daß der dann erhaltene Treibmist mit Hilfe von beispielsweise einer Beregnungshaspel oder mit einem Schleppschlauch mit Spritzgestänge über das Land verteilt werden kann. Der Mist ist durch die genannte Bearbeitung in einen Zustand gebracht worden, in dem dieser leicht einige Zentimeter in den Boden eindringen kann. Bei Verteilung über beispielsweise Grasland kann dieser Prozeß noch erleichtert werden, wenn das Land mit einem Grasbelüfter, einer Stechrolle oder einer andersartigen Maschine, mit deren Hilfe Löcher in den Boden gestochen werden können, bearbeitet worden ist. Der bearbeitete Treibmist, der über das Land verteilt wird, läuft dann teilweise in die Löcher bis zum Niveau der Wurzeln des Grases, während der Rest des bearbeiteten Treibmistes zwischen dem Gras liegen bleibt und/oder in die Oberflächenschicht des Landes aufgenommen wird. Wenn der ausgestreute Mist in genügendem Maße getrocknet ist, kann das Land erwünschtenfalls noch mit einer Wiesenegge bearbeitet werden.

Das Zerkleinerungswerkzeug wird insbesondere durch ein oder mehrere rotierbare Messer gebildet, in einer praktischen Konstruktion beispielsweise durch drei radial nach außen gerichtete Messer.

Um dafür zu sorgen, daß aller zugeführte Treibmist der Wirkung des Zerkleinerungswerkzeuges in genügender Weise unterworfen wird, erstreckt sich an beiden Seiten der Messer ein Wandteil, welche Wandteile eine Öffnung an der Stelle der Messer freilassen und weiter derart mit der Innenwand des Gehäuses verbunden sind, daß der Treibmist am einen Wandteil entlanggeführt werden kann, durch die Öffnung an der Stelle der Messer gesaugt werden kann und am anderen Wandteil entlanggeführt werden kann. Um dies weiter in praktischer Weise zu realisieren, kann die Vorrichtung an eine Pumpe angeschlossen werden, um den Treibmist am betreffenden Einlaß aufzusaugen, durch das Gehäuse zu führen und am Auslaß abzusaugen.

In einer günstigen Ausführungsform kann das Zerkleinerungswerkzeug von der Zapfwelle eines Schleppers aus angetrieben werden. Dabei kann dann seitlich des Gehäuses der Vorrichtung ein Übertragungsmechanismus angeordnet werden, um die Messer mit einer Drehzahl in der Größenordnung von 3000 bis 6000, bevorzugt etwa 4500 Umdrehungen pro Minute drehen zu lassen.

Die Erfindung wird im folgenden anhand der beiliegenden Zeichnung näher erläutert. Darin zeigt:
Fig. 1 in schematischer Weise eine Draufsicht eines Querschnitts des Gehäuses der Vorrichtung nach der Erfindung;
Fig. 2 in schematischer Weise einen vertikalen Längsschnitt dieses Gehäuses;
Fig. 3 in schematischer Weise einen vertikalen Querschnitt des Gehäuses mit dem darauf montierten Übertragungsmechanismus; und
Fig. 4 ein Maisland, über das der mit Hilfe der Vorrichtung nach der Erfindung bearbeitete Treibmist ausgestreut ist.

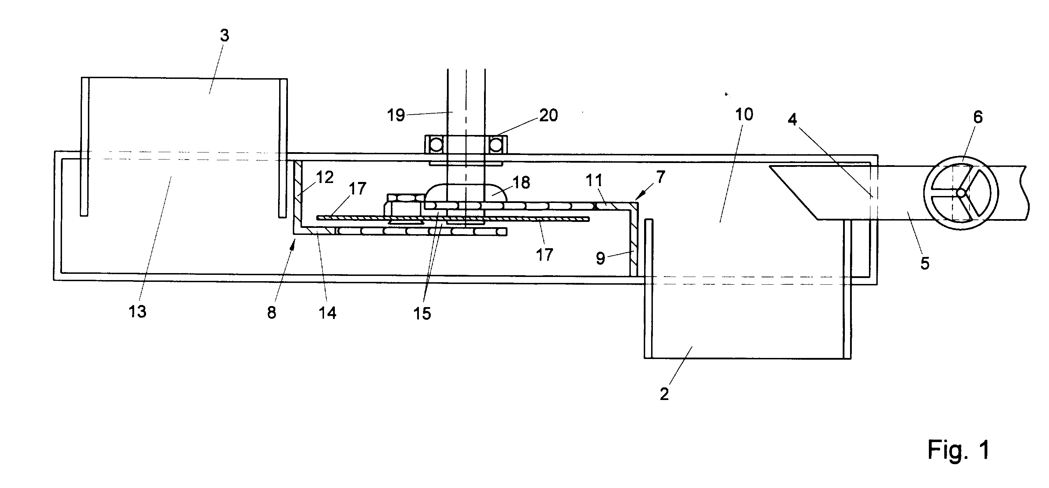

In den Figuren 1-3 ist das Gehäuse der Vorrichtung nach der Erfindung mit dem Bezugszeichen 1 bezeichnet. Das Gehäuse ist blockförmig gestaltet und besitzt nahe dem einen Ende an der einen Seite einen Einlaß 2 für insbesondere aus einer Senkgrube aufzusaugenden Treibmist und nahe dem anderen Ende an der anderen Seite einen Auslaß 3 für den bearbeiteten Mist. Vor dem Einlaß 2 kann erwünschtenfalls ein Steinfänger angeordnet werden. Weiter ist an der kurzen Seite an dem Ende, wo der Einlaß 2 angeordnet ist, ein Einlaß 4 für Wasser vorgesehen. In das an diesen Einlaß angeschlossene Einlaßrohr 5 ist ein Hahn 6 aufgenommen. Das Einlaßrohr 5 besitzt ein abgeschrägtes offenes Ende etwa in der Mitte neben dem Einlaß 2, so daß eine gute Vermischung des aufgesaugten Treibmistes mit dem zugesetzten Wasser erreicht wird. In der Praxis zeigt sich, daß es praktisch immer genügt, wenn dem aufgesaugten Treibmist 30 bis 70 Gew.% Wasser zugesetzt wird.

Im Gehäuse 1 sind zwei Wandteile 7 und 8 angeordnet, die sich über die ganze Höhe des Gehäuses 1 erstrecken. Der Wandteil 7 umfaßt einen seitwärts gerichteten Teil 9, der zusammen mit drei betreffenden Außenwänden des Gehäuses 1 einen Einführraum 10 begrenzt, sowie einen an das Ende dieses Teiles 9 anschließenden und sich in Längsrichtung erstreckenden vertikalen Teil 11. Der Wandteil 8 umfaßt ebenfalls einen seitwärts gerichteten Teil 12, der zusammen mit drei betreffenden Außenwänden des Gehäuses 1 einen Abführraum 13 begrenzt, sowie einen an das Ende dieses Teiles 12 anschließenden und sich in Längsrichtung erstreckenden vertikalen Teil 14. Der vertikale Teil 11 erstreckt sich parallel am vertikalen Teil 14 entlang und überlappt diesen Teil 14, von einer Längsseitenfläche her gesehen, teilweise.

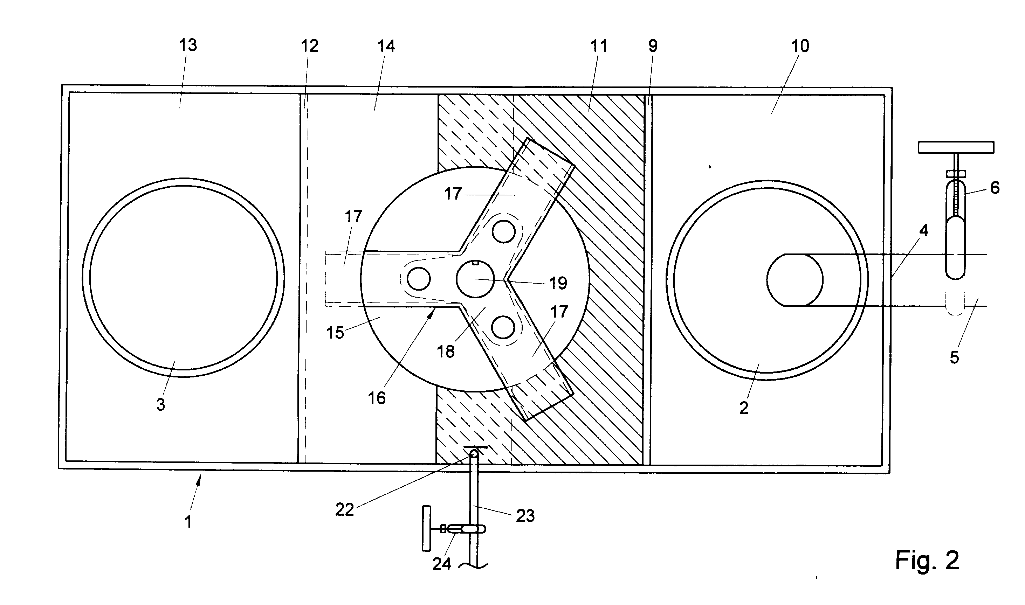

Zwischen den beiden vertikalen Teilen 11 und 14 befindet sich eine Öffnung 15, durch die der verdünnte Treibmist aus dem Einführraum 10 am horizontalen Teil 11 entlanggeführt werden kann, um dann am vertikalen Teil 14 entlang und über den Abführraum 13 abgesaugt zu werden. Wie in Fig. 2 gezeigt, weist diese Öffnung 15, von der Seite her gesehen, eine Kreisform auf, die durch Anordnen einer kreisbogenförmigen Aussparung in den beiden vertikalen Teilen 11 und 14 erzielt ist. In dieser Öffnung ist ein Zerkleinerungswerkzeug 16 angeordnet, und zwar in Form von drei radial nach außen gerichteten, in einer im wesentlichen vertikalen Ebene rotierbaren Messern 17. Es wird jedoch klar sein, daß auch eine andere Anzahl Messer verwendet werden kann. Weiter ist es auch möglich, die Messer in einer horizontalen Ebene oder in einer schiefwinklig gedachten Ebene rotieren zu lassen. Die Messer 17 sind an ihren Längsseiten mit einer Schneidkante versehen. Sie sind durch ein Kupplungsstück 18 mit einer die Seitenwand des Gehäuses 1 durchragenden Welle 19 verbunden. Die Welle 19 ist drehbar in dem auf der betreffenden Seitenwand des Gehäuses 1 befestigten Lager 20 angeordnet und über einen Übertragungsmechanismus 21 an die Zapfwelle eines Schleppers anschließbar. Mit Hilfe des Übertragungsmechanismus kann die Drehzahl der Zapfwelle auf einen Wert von etwa 4500 Umdrehungen pro Minute erhöht werden, mit welcher Drehzahl die Messer 17 gedreht werden. In das Gehäuse des Lagers 20 ist ein Dichtungsring aufgenommen, um ein Auslaufen des Mistes zu verhindern.

Das Gehäuse ist weiter an der Unterseite mit einem Einlaß 22 für Luft versehen, wobei in das Luftzuführrohr 23 ein Hahn 24 aufgenommen ist. Dieser Einlaß mündet in das Gehäuse 1 im Raum zwischen den zwei vertikalen Teilen 11 und 14, und zwar etwa gegenüber der Welle des Zerkleinerungswerkzeuges. Es zeigt sich nämlich, daß die Wirkung des Treibmistes auf dem Land günstig beeinflußt wird, wenn während der Bearbeitung des verdünnten Treibmistes insbesondere an der Stelle des Zerkleinerungswerkzeuges dem Treibmist auch Luft zugeführt wird.

Der Auslaß 3 des Gehäuses 1 kann an eine Pumpe, beispielsweise eine Verdrängerpumpe, angeschlossen werden, um den Mist über den Einlaß aufzusaugen, durch das Gehäuse, insbesondere zwischen den Messern 17 des Zerkleinerungswerkzeuges 16 hindurchzusaugen und über den Auslaß 3 abzusaugen und beispielsweise einem Verteilungsmechanismus wie einer Beregnungshaspel oder einem Schleppschlauch mit Spritzgestänge direkt zuzuführen.

Bevor der so bearbeitete Treibmist auf Grasland verteilt wird, ist es gewünscht, dieses Land mit einer Art Grasbelüfter oder einer derartigen Vorrichtung zu bearbeiten, die mit einer Rolle mit auf deren Außenfläche versetzt nebeneinander angeordneten, beispielsweise 5 cm breiten und 5 mm dicken Messern versehen ist. Hiermit können beispielsweise 10 cm tiefe Löcher in um beispielsweise 10 cm auseinander liegenden Reihen in den Boden gestochen werden, in welche Löcher ein Teil des bearbeiteten Treibmistes läuft und dadurch zu den Wurzeln des Grases strömt.

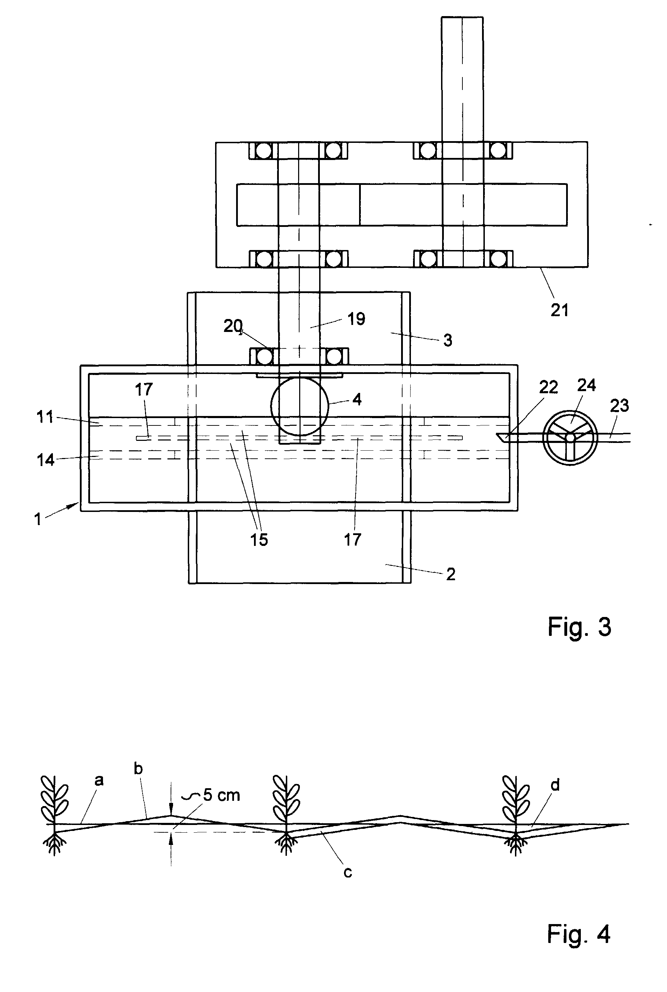

Eine andere Anwendung des bearbeiteten Treibmistes ist in Fig. 4 gezeigt, in der in schematischer Weise ein Maisland dargestellt ist. Maisland wird normalerweise nicht vor dem Einsäen gemistet, sondern wenn der Mais schon auf dem Land steht. Auch das Saatbett weicht von den herkömmlichen Saatbetten ab, und zwar in dem Sinne, daß es gegen die Maispflanze abfällt. Mais wird in Reihen mit einem Reihenabstand von etwa 70 cm gesät. Mitten zwischen zwei Reihen ist der Boden um etwa 5 cm höher. Mit Hilfe einer Beregnungshaspel kann der in der oben beschriebenen Vorrichtung erhaltene Treibmist über die jungen Maispflanzen verteilt werden. Der ja stark verdünnte Treibmist strömt dann zu den Maispflanzen und den Wurzeln dieser Pflanzen. Wenn das Maisland getrocknet ist, wird es gehackt und eingeebnet, wodurch der Treibmist, der teilweise in den Boden eingezogen ist, von der Mitte zwischen den Pflanzenreihen zu den Pflanzen verschoben wird. In Fig. 4 ist das Mähfeld durch die horizontale Linie a, das Saatbett durch die geknickte Linie b, der eingezogene Treibmist durch c und der Effekt nach Einebnung durch d bezeichnet.

Außer den hier genannten Anwendungen gibt es viele andere. So ist es möglich, die Mistbearbeitungsvorrichtung unter Benutzung einer Beregnungshaspel zum Misten von eingesätem Rübenland, Getreideland usw. einzusetzen. Das hat den Vorteil, daß mehr Saat keimen wird, weil der Treibmist Feuchtigkeit bindet. Der Mist ist weiter derart bearbeitet, daß der Boden und darauf stehende Pflanzen den Mist leichter aufnehmen können, wodurch auch weniger Nährstoffe verlorengehen und weniger Bodenverschmutzung auftritt. Dadurch, daß die Pflanzen die Miststoffe leichter aufnehmen können, wird ein energiereicheres Gewächs erhalten; es braucht daher weniger Kunstdünger gestreut zu werden. Bei Gras war, wie sich weiter zeigte, ein erhöhter Energiewert vorhanden und wurde ein höherer Ertrag erhalten, wodurch die darauf grasenden Tiere mit weniger Kraftfutter auskommen konnten.

## Patentansprüche

1. Vorrichtung zum Bearbeiten von Treibmist, versehen mit einem Gehäuse mit einem Einlaß und einem Auslaß zum Zuführen bzw. Abführen von Treibmist, einem Einlaß für Wasser und einem Einlaß für Luft sowie einem angetriebenen Zerkleinerungswerkzeug, an dem der mit Wasser verdünnte Treibmist zusammen mit der zugeführten Luft entlanggeführt wird, um den Treibmist in einen Zustand zu bringen, in dem dieser leicht von dem Land, über das der Treibmist verteilt wird, aufgenommen werden kann.

2. Vorrichtung nach Anspruch 1, dadurch gekennzeichnet, daß dem aufgesaugten Treibmist im Gehäuse 30 bis 70 Gew.% Wasser zugesetzt wird.

3. Vorrichtung nach Anspruch 1 oder 2, dadurch gekennzeichnet, daß das Zerkleinerungswerkzeug durch ein oder mehrere rotierbare Messer gebildet wird.

4. Vorrichtung nach Anspruch 3, dadurch gekennzeichnet, daß das Zerkleinerungswerkzeug durch drei radial nach außen gerichtete Messer gebildet wird.

5. Vorrichtung nach Anspruch 3 oder 4, dadurch gekennzeichnet, daß sich an beiden Seiten der Messer ein Wandteil erstreckt, welche Wandteile eine Öffnung an der Stelle der Messer freilassen und weiter derart mit der Innenwand des Gehäuses verbunden sind, daß der Treibmist am einen Wandteil entlanggeführt werden kann, durch die Öffnung an der Stelle der Messer gesaugt werden kann und am anderen Wandteil entlanggeführt werden kann.

6. Vorrichtung nach Anspruch 5, dadurch gekennzeichnet, daß diese an eine Pumpe angeschlossen ist, um den Treibmist am betreffenden Einlaß aufzusaugen, durch das Gehäuse zu führen und am Auslaß abzusaugen.

7. Vorrichtung nach einem der vorhergehenden Ansprüche, dadurch gekennzeichnet, daß das Zerkleinerungswerkzeug von der Zapfwelle eines Schleppers aus angetrieben werden kann.

8. Vorrichtung nach Anspruch 7, dadurch gekennzeichnet, daß ein Übertragungsmechanismus vorgesehen ist, um die Messer mit einer Drehzahl in der Größenordnung von 3000 bis 6000, bevorzugt etwa 4500 Umdrehungen pro Minute anzutreiben.

9. Verfahren zum Bearbeiten von Treibmist, wobei in ein dazu bestimmtes Gehäuse aufgesaugter Treibmist mit Wasser verdünnt wird und, mit Luft vermischt, von einem Zerkleinerungswerkzeug bearbeitet wird, worauf der bearbeitete Treibmist über das Land verteilt werden kann.
